# EUROPEAN PATENT SPECIFICATION

(11) **EP 4 491 993 B1**
(45) Date of publication and mention of the grant of the patent: **27.05.2026**
(21) Application number: 23766967.6
(22) Date of filing: 10.03.2023
(51) Int. Cl.: F28F 9/02, B23K 1/00, B23K 101/14

(54) **HEADER TUBE, HEAT EXCHANGER, AIR CONDITIONER, AND METHOD FOR MANUFACTURING HEADER TUBE**
SAMMELROHR, WÄRMETAUSCHER, KLIMAANLAGE UND VERFAHREN ZUR HERSTELLUNG DES SAMMELROHRES
TUBE DE COLLECTEUR, ÉCHANGEUR DE CHALEUR, CLIMATISEUR ET PROCÉDÉ DE FABRICATION DE TUBE DE COLLECTEUR

(30) Priority: 11.03.2022 JP 2022037966
(43) Date of publication of application: 15.01.2025
(73) Proprietor: MITSUBISHI ELECTRIC CORPORATION, Chiyoda-ku Tokyo 100-8310 (JP)
(72) Inventor: INAMI, Kota, Tokyo 100-8310 (JP); NAKAJIMA, Takashi, Tokyo 100-8310 (JP); KATSUMA, Norio, Tokyo 100-8310 (JP); OKUMA, Yuriko, Tokyo 100-8310 (JP)
(74) Representative: Diehl & Partner
(86) International application number: PCT/JP2023/009267
(87) International publication number: WO 2023/171791

(56) References cited:
- EP-A1- 0 128 806
- WO-A1-2021/024991
- WO-A1-2021/235055
- WO-A1-2021/235055
- DE-A1- 102009 053 540
- GB-A- 1 345 399
- JP-A- 2000 249 492
- JP-A- 2005 345 037
- JP-A- 2007 144 502
- JP-U- S6 390 780
- KR-A- 20040 061 478
- US-A1- 2009 095 458
- US-A1- 2009 095 458

## Description

### Technical Field

The present disclosure relates to a header tube as defined by the preamble of claim 1, and as illustrated in WO2021/024991A.

### Background Art

Air conditioners accommodate refrigerant circulating between an indoor unit and an outdoor unit and thus heat or cool the indoor air. Each of the indoor unit and the outdoor unit of the air conditioner includes a heat exchanger. The heat exchanger causes heat exchange between refrigerant and the environment surrounding the indoor unit or the outdoor unit. The heat exchanger includes a heat transfer tube array including multiple heat transfer tubes, and header tubes connected to the heat transfer tube array.

Some header tubes included in heat exchangers have been known each manufactured through bonding multiple members to each other by brazing. For example, Patent Literature 1 discloses a heat exchanger, which includes a header tube manufactured through bonding a first member including a bottom plate and a pair of lateral plates to a second member by brazing. Each of the lateral plates is provided with tab members at the edge adjoining the second member, and the tab members are bent to come into contact with the second member. Patent Literature 2 discloses the features of the preamble of the independent claims.
Patent Literature 3 discloses a structure of a header-tank for a heat exchanger. Two members of the header-tank are attached to each other using tabs that are formed at an end of a bending portion of one of the members and that are rounded towards a tip. The tabs engage with coupling grooves that are provided at the other of the members.
Patent Literatures 4 and 5 disclose details of header tubes of heat exchangers. According to
Patent Literature 4 end plates are provided to close ends of the header tubes in a longitudinal direction. According to Patent Literature 5 notches are provided next to tabs.

### Citation List

### Patent Literature

Patent Literature 1: JP 2016-95086
Patent Literature 2: WO 2021/024991 A1
Patent Literature 3: US 2009/095458 A1
Patent Literature 4: WO 2021/235055 A1
Patent Literature 5: DE 10 2009 053 540 A1

### Summary of Invention

### Technical Problem

The air conditioner needs to have a structure in which refrigerant circulating in the air conditioner does not leek during circulation. In order to prevent leakage of refrigerant, the first member and the second member must be air-tightly bonded to each other in the header tube disclosed in Patent Literature 1.

The header tube disclosed in Patent Literature 1, however, suffers from a problem that the gaps between the tab members and the second member are expanded at the tips of the tab members due to springback behaviors occurring after bending of the tab members. Such expanded gaps between the tab members and the second member may fail to retain droplets of a molten brazing material in the brazing process. These droplets of the brazing material may run downward and fail to be sufficiently distributed across the joint between the first member and the second member. The joint between the first member and the second member may accordingly have inferior airtightness. That is, the header tube disclosed in Patent Literature 1 cannot readily achieve an airtight structure at the joint between the first member and the second member in the manufacturing process.

The present disclosure is made in view of the above problems, and an objective of the present disclosure is to provide a header tube that is manufactured by bending tab members of one member over the other member and thus fixing the other member relative to the one member, and then bonding these members to each other by brazing, and that can readily achieve an airtight structure in the manufacturing process.

Another objective of the present disclosure is to provide a heat exchanger and an air conditioner including the above-described header tube.

### Solution to Problem

The above object is solved by the combination of features of claim 1. Preferred embodiments are defined in dependent claims.

### Advantageous Effects of Invention

In the header tube according to the present disclosure, droplets of a molten brazing material, which is preliminarily cladded on the surface of a tab member to come into contact with the second member, run downward in the brazing process. The droplets of the molten brazing material are accumulated into a large thickness at the tip of the tab member, and thus readily come into contact with the second member. The accumulated brazing material can prevent a crack from being generated at the brazed joint due to the absence of the brazing material. The present disclosure can therefore provide a header tube that can readily achieve an airtight structure in the manufacturing process.

### Brief Description of Drawings

FIG. 1 is an explanatory diagram illustrating a fundamental configuration of an air conditioner;
FIG. 2A is a front view illustrating a fundamental configuration of a heat exchanger included in the air conditioner illustrated in FIG. 1;
FIG. 2B is a side view of the heat exchanger;
FIG. 3A is a transverse sectional view of an upper header tube of the heat exchanger illustrated in FIGS. 2A and 2B taken along the plane represented by the line I-I of FIG. 2A;
FIG. 3B is a longitudinal sectional view of a part of the upper header tube taken along the plane represented by the line II-II of FIG. 2B;
FIG. 4A is a perspective view illustrating the external shape of a first member that constitutes the upper header tube of the heat exchanger illustrated in FIGS. 2A and 2B, before fitting of a second member to the first member and bending of tab members;
FIG. 4B is a perspective view of the first member after fitting of the second member to the first member;
FIG. 4C is an enlarged view of one of the tab members of the first member as seen in the direction represented by the arrow A of FIG. 4A;
FIG. 5 is a transverse sectional view of the upper header tube for describing functions of the tab members;
FIG. 6 is a transverse sectional view illustrating the upper header tube after a brazing process in conformity with FIG. 5;
FIG. 7A is a front view illustrating the shape of a test piece that imitates the tab member of the first member illustrated in FIGS. 4A to 4C before an examination;
FIG. 7B is a side view illustrating the shape of the test piece after the examination;
FIG. 7C is a graph illustrating a relationship between the ratio of the diameter of the semicircular tip of the test piece to the width of the proximal portion of the test piece and the height of a lump of a brazing material formed at the tip of the test piece;
FIG. 7D is a front view illustrating the shape of another test piece before an examination;
FIG. 7E is a side view illustrating the shape of the other test piece after the examination;
FIG. 8A is a plan view illustrating the shape of a tab member according to Modification 1 of the present disclosure;
FIG. 8B is a plan view illustrating the shape of a tab member according to Modification 2 of the present disclosure;
FIG. 9 is a transverse sectional view illustrating the structure of an upper header tube according to Modification 3 of the present disclosure in conformity with FIG. 5;
FIG. 10A is a perspective view illustrating the shape of a first member according to Modification 4;
FIG. 10B is a perspective view illustrating the shape of an end plate according to Modification 4;
FIG. 10C is a perspective view of the first member after fitting of the end plate to the first member;
FIG. 10D is a perspective view of the first member after fitting of the end plate and a second member to the first member and bending of tab members;
FIG. 10E is an explanatory diagram illustrating the shapes of the tab members and an engaging notch of the first member according to Modification 4, in conformity with FIG. 4C; and
FIG. 11 is an explanatory diagram illustrating the shapes of tab members and notches of a first member according to Modification 5, in conformity with FIG. 4C.

### Description of Embodiments

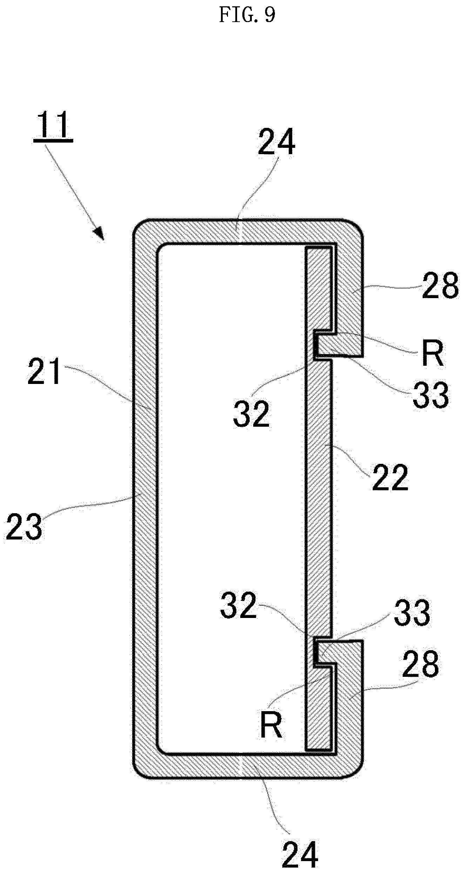

The claimed invention is shown in Figures 9, 10A to 10E and 11. The following describes configurations and effects of a header tube, a heat exchanger, and an air conditioner according to some embodiments of the present disclosure in detail, with reference to the accompanying drawings. In each of the drawings, the components identical or corresponding to each other are provided with the same reference symbol.

### Air conditioner

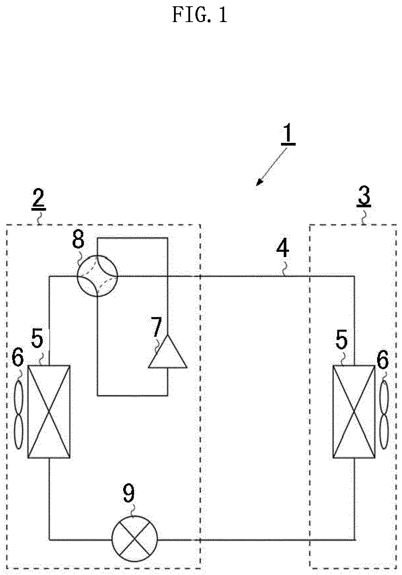

FIG. 1 is an explanatory diagram illustrating a fundamental configuration of an air conditioner 1 according to an embodiment. The air conditioner 1 adjusts the temperature of the air in an indoor space (not illustrated) to be conditioned, and serves as a heater or cooler as required. As illustrated in FIG. 1, the air conditioner 1 includes an outdoor unit 2 and an indoor unit 3. The air conditioner 1 also includes a pipe 4 between the outdoor unit 2 and the indoor unit 3. The pipe 4 allows refrigerant to flow therethrough and circulate between the outdoor unit 2 and the indoor unit 3.

As illustrated in FIG. 1, the outdoor unit 2 and the indoor unit 3 each include a heat exchanger 5 and a fan 6. The heat exchanger 5 causes heat exchange between refrigerant flowing through the heat exchanger 5 and the environment surrounding the heat exchanger 5. The fan 6 is a blower that sends the ambient air around the heat exchanger 5 to the heat exchanger 5, and thus facilitates the heat exchange.

As illustrated in FIG. 1, the outdoor unit 2 includes a compressor 7, a four-way valve 8, and an expansion valve 9. The compressor 7 performs adiabatic compression of refrigerant in a gas state. The four-way valve 8 switches the direction of refrigerant flow in the pipe 4. The expansion valve 9 reduces the pressure of refrigerant in a liquid state and thus evaporates the refrigerant.

In FIG. 1, the four-way valve 8 is turned into a mode in which the air conditioner 1 serves as a heater. In this mode, the refrigerant compressed by the compressor 7 and having an increased temperature flows into the heat exchanger 5 of the indoor unit 3, and discharges heat to the indoor air. The refrigerant that has flown through the heat exchanger 5 of the indoor unit 3 flows through the expansion valve 9 into the heat exchanger 5 of the outdoor unit 2, and absorbs heat from the outdoor air. The refrigerant then returns to the compressor 7. When the four-way valve 8 is turned into another mode to reverse the direction of refrigerant flow, the refrigerant absorbs heat in the heat exchanger 5 of the indoor unit 3, and discharges heat in the heat exchanger 5 of the outdoor unit 2. The air conditioner 1 in this case serves as a cooler.

### Heat exchanger

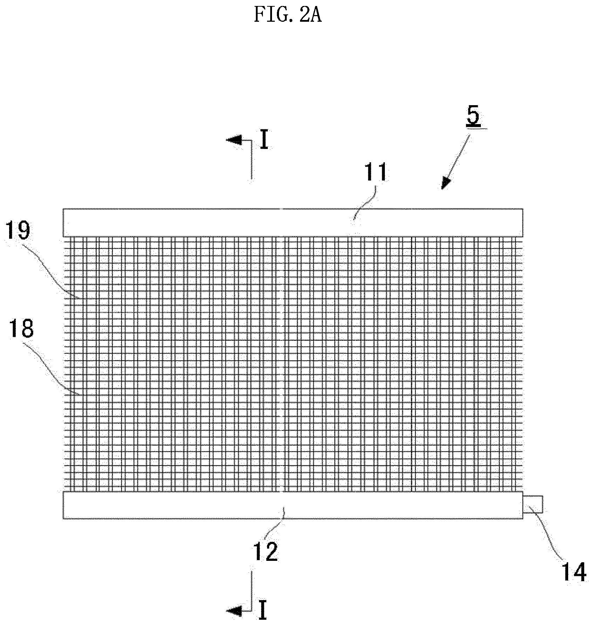

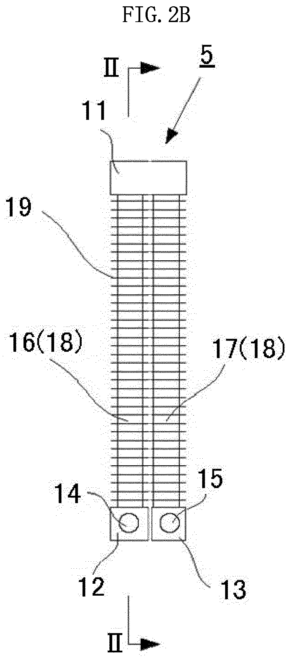

FIG. 2A is a front view illustrating a fundamental configuration of the heat exchanger 5, and FIG. 2B is a side view of the heat exchanger 5. As illustrated in FIGS. 2A and 2B, the heat exchanger 5 includes an upper header tube 11, a first lower header tube 12, and a second lower header tube 13.

As illustrated in FIG. 2B, the first lower header tube 12 has a first inlet/outlet port 14, whereas the second lower header tube 13 has a second inlet/outlet port 15. The first inlet/outlet port 14 and the second inlet/outlet port 15 are each a pipe joint connected to the pipe 4 (not illustrated in FIG. 2B). The first inlet/outlet port 14 and the second inlet/outlet port 15 allow refrigerant to enter or exit the heat exchanger 5. The first lower header tube 12 and the second lower header tube 13 have substantially the same structure, although this structure is not described in detail.

As illustrated in FIG. 2B, the first lower header tube 12 and the upper header tube 11 are provided with a first heat transfer tube array 16 therebetween, which couples the first lower header tube 12 to the upper header tube 11. The second lower header tube 13 and the upper header tube 11 are provided with a second heat transfer tube array 17 therebetween, which couples the second lower header tube 13 to the upper header tube 11.

As illustrated in FIG. 2A, the first heat transfer tube array 16 includes multiple heat transfer tubes 18 arranged at regular intervals in the longitudinal direction of the first lower header tube 12 and the upper header tube 11. The heat transfer tubes 18 have internal flow paths, which are not illustrated. These flow paths allow refrigerant to travel between the first lower header tube 12 and the upper header tube 11. The second heat transfer tube array 17 also includes multiple heat transfer tubes 18 arranged at regular intervals in the longitudinal direction of the second lower header tube 13 and the upper header tube 11. The heat transfer tubes 18 also have internal flow paths, which allow refrigerant to travel between the second lower header tube 13 and the upper header tube 11.

As illustrated in FIGS. 2A and 2B, multiple heat transfer fins 19 are arranged at regular intervals between the upper header tube 11 and the first and second lower header tubes 12 and 13. The heat transfer fins 19 are made of thin metal plates and physically coupled to the first heat transfer tube array 16 and the second heat transfer tube array 17. The heat transfer fins 19 facilitate heat transfer between the ambient air and the refrigerant flowing in the first heat transfer tube array 16 and the second heat transfer tube array 17.

In an exemplary case where refrigerant enters the first lower header tube 12 via the first inlet/outlet port 14, the above-described structure allows the refrigerant that has entered the first lower header tube 12 to flow through the heat transfer tubes 18 of the first heat transfer tube array 16 to the upper header tube 11. The refrigerant that has arrived at the upper header tube 11 flows through the heat transfer tubes 18 of the second heat transfer tube array 17 to the second lower header tube 13. The refrigerant that has arrived at the second lower header tube 13 is released to the outside via the second inlet/outlet port 15. In another exemplary case where refrigerant enters the second lower header tube 13 via the second inlet/outlet port 15, the refrigerant travels in the route opposite to the above-described route, specifically, flows through the second heat transfer tube array 17, the upper header tube 11, and the first heat transfer tube array 16 in sequence, to the first lower header tube 12. The refrigerant that has arrived at the first lower header tube 12 is released to the outside via the first inlet/outlet port 14.

The refrigerant flowing through the heat exchanger 5 travels inside the heat transfer tubes 18, as described above. The refrigerant, while traveling inside the heat transfer tubes 18, exchanges heat with the ambient air around the heat exchanger 5.

### Upper header tube

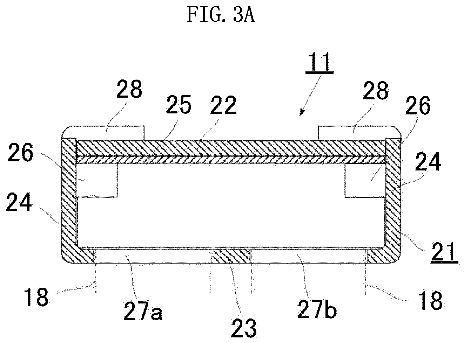

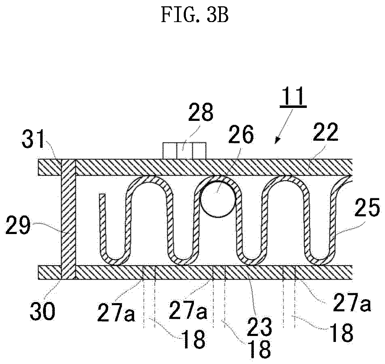

FIG. 3A is a transverse sectional view of the upper header tube 11 taken along the plane represented by the line I-I of FIG. 2A. FIG. 3B is a longitudinal sectional view of a part of the upper header tube 11 taken along the plane represented by the line II-II of FIG. 2B. The upper header tube 11 is an example of a header tube according to the present disclosure, as described above.

As illustrated in FIG. 3A, the upper header tube 11 includes a first member 21 and a second member 22. The first member 21 and the second member 22 are bonded to each other by brazing. The first member 21 is a metal component including a bottom plate 23 and a pair of lateral plates 24 standing at opposed edges of the bottom plate 23. The first member 21 as a whole has a channel-shape defining a groove. The second member 22 is a metal component disposed at a position apart from the bottom plate 23 of the first member 21, and held between the pair of lateral plates 24 of the first member 21. In short, the second member 22 corresponds to a lid of the groove defined by the first member 21. As illustrated in FIG. 3A, the space inside the upper header tube 11, that is, the space defined between the first member 21 and the second member 22 accommodates a corrugated plate 25. The lateral plates 24 of the first member 21 are provided with protruding columns 26 having a cylindrical shape on the inner surfaces. The specific shapes and functions of the corrugated plate 25 and the protruding columns 26 are described below.

As illustrated in FIG. 3A, the bottom plate 23 of the first member 21 has insertion holes 27a and 27b. The insertion holes 27a receive the respective ends of the heat transfer tubes 18 of the first heat transfer tube array 16, and are bonded to the ends by brazing. The insertion holes 27b receive the respective ends of the heat transfer tubes 18 of the second heat transfer tube array 17, and are bonded to the ends by brazing.

As illustrated in FIG. 3A, the lateral plates 24 of the first member 21 each have tab members 28 at the edge. The tab members 28 are bent relative to the lateral plates 24 so as to face the second member 22. The second member 22 is thus held between the corrugated plate 25 and the tab members 28.

As illustrated in FIG. 3B, the upper header tube 11 is provided with an end plate 29 adjacent to the left end in the longitudinal direction of the upper header tube 11. The bottom plate 23 and the second member 22 respectively have engaging holes 30 and 31, which receive the opposed edges of the end plate 29 fitted therein. FIG. 3B is a longitudinal sectional view of a part of the upper header tube 11 adjacent to the left end in FIG. 2A. The upper header tube 11 has a part adjacent to the right end having the same structure as the part adjacent to the left end. That is, the upper header tube 11 is provided with another end plate 29 adjacent to the right end in the longitudinal direction of the upper header tube 11.

The corrugated plate 25 is disposed between the first member 21 and the second member 22, as described above. The corrugated plate 25 has a wavy shape, as illustrated in FIG. 3B. This corrugated plate 25 divides the internal space of the upper header tube 11 into compartments each accommodating a pair of insertion holes 27a and 27b adjacent to each other. This structure causes the refrigerant that has entered the upper header tube 11 to travel within each of the compartments defined by the corrugated plate 25. For example, the refrigerant that has entered a certain compartment through the heat transfer tube 18 fixed to the corresponding insertion hole 27a flows into the heat transfer tube 18 fixed to the insertion hole 27b located adjacent to this insertion hole 27a, without flowing to the other compartments.

As illustrated in FIGS. 3A and 3B, the corrugated plate 25 meshes with the protruding columns 26, and is thus prevented from being displaced in the longitudinal direction of the upper header tube 11. The protruding columns 26 are designed to have a radius equal to the radius of curvature of curved portions of the corrugated plate 25, and arranged at the same pitch as those of the insertion holes 27a and 27b. The protruding columns 26 can thus align the corrugated plate 25 to the proper position relative to the insertion holes 27a and 27b just by meshing with the corrugated plate 25. The corrugated plate 25 holds the second member 22 against the tab members 28, as described above.

The upper header tube 11 may exclude the corrugated plate 25. The internal space of the upper header tube 11 may be divided into multiple compartments by multiple end plates 29, specifically, three or more end plates 29 arranged in the longitudinal direction of the upper header tube 11, so as to prevent the second member 22 from being displaced toward the bottom plate 23 of the first member 21 across the longitudinal direction of the upper header tube 11.

### First member and second member

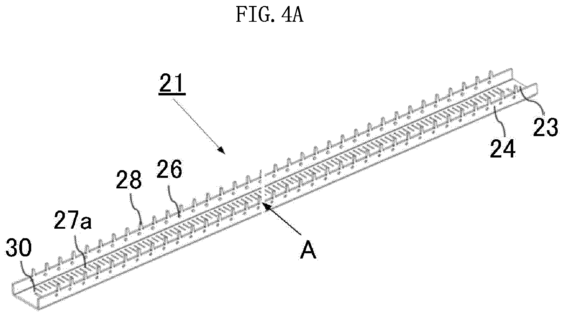

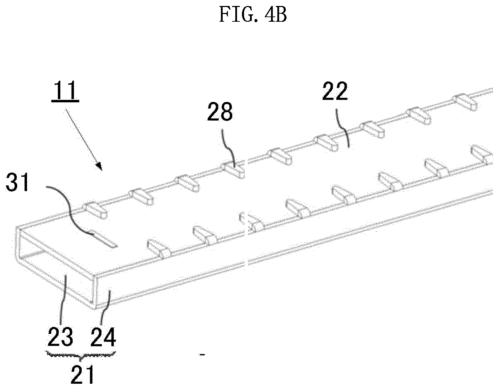

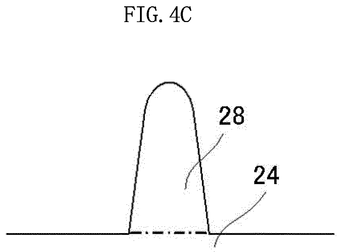

FIG. 4A is a perspective view illustrating the external shape of the first member 21 that constitutes the upper header tube 11. FIG. 4B is a perspective view of the first member 21 after fitting of the second member 22 to the first member 21. FIG. 4C is an enlarged view of one of the tab members 28 of the first member 21 as seen in the direction represented by the arrow A of FIG. 4A.

As illustrated in FIG. 4A, the lateral plates 24 of the first member 21 each have multiple tab members 28 at the edge. As illustrated in FIG. 4B, the second member 22 is fitted to the first member 21, followed by a step of bending the tab members 28 and thus bringing the tab members 28 into contact with the second member 22. As illustrated in FIG. 4C, each of the tab members 28 in plan view has the maximum width at the proximal portion, that is, the portion adjoining the lateral plate 24. The tab member 28 is tapered toward the tip, that is, the portion most distant from the lateral plate 24. The tip of the tab member 28 is shaped to have an arc contour. The shape of the tab member 28 in plan view mentioned in this specification means the shape like that illustrated in FIG. 4C. The lengthwise direction of the tab member 28 indicates the direction from the proximal portion toward the tip of the tab member 28. The widthwise direction of the tab member 28 indicates the direction orthogonal to the lengthwise direction in the shape in plan view illustrated in FIG. 4C.

### Functions of tab members

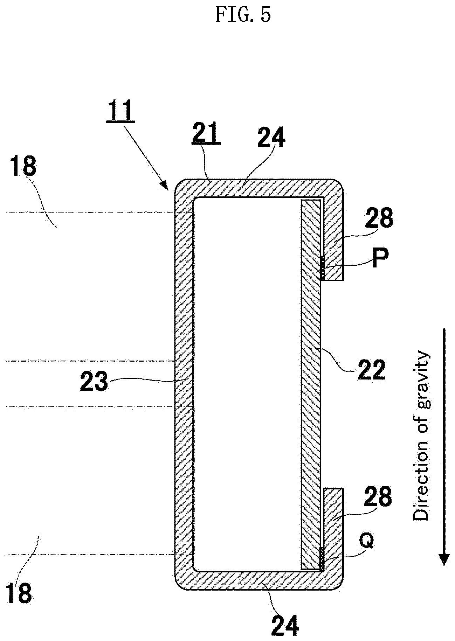

FIG. 5 is a transverse sectional view of the upper header tube 11. The following describes functions of the tab members 28 with reference to FIG. 5. The heat exchanger 5 is manufactured through assembling the components of the heat exchanger 5 with each other, heating the assembled components in a furnace, and then bonding the components to each other by brazing. In general, the heat exchanger 5 is laid down during the brazing process for the heat exchanger 5, because of the limited height of the furnace. That is, the heat exchanger 5 is subject to the brazing process in the furnace such that the longitudinal axes of the heat transfer tubes 18 are horizontally oriented. In short, the brazing process is applied to the heat exchanger 5 including the upper header tube 11 oriented as illustrated in FIG. 5. The first member 21 and the second member 22 are preliminarily provided with a brazing material cladded on their surfaces.

While the heat exchanger 5 is heated in a furnace, which is not illustrated, droplets of a molten brazing material in each of the gaps between the tab members 28 and the second member 22 located above in the first member 21 in FIG. 5 run downward due to gravity, to the tip of the tab member 28, that is, to the site represented by the reference symbol P in FIG. 5. Since the tab member 28 has a larger width at the proximal portion and a smaller width at the tip as described above, droplets of the brazing material residing in the proximal portion of the tab member 28 having a larger width run down and are concentrated at the tip of the tab member 28 having a smaller width. The concentrated droplets of the molten brazing material form a large lump at the tip of the tab member 28 and thicken the tip. This lump of the brazing material can be retained between the tip of the tab member 28 and the second member 22, even if the gap between the tip of the tab member 28 and the second member 22 is expanded by a springback behavior occurring after bending of the tab member 28. The brazing material, which is preliminarily cladded on the inner and outer surfaces of the second member 22 and the inner surface of the lateral plate 24, is molten by heating and infiltrates into the gap between the proximal portion of the tab member 28 and the second member 22, because of a capillary action generated at the gap. This brazing material fills the gap between the proximal portion of the tab member 28 and the second member 22, and the gap between the lateral plate 24 and the second member 22. The brazing material is thus sufficiently distributed across the joint between the first member 21 and the second member 22 located above in the first member 21. The capillary action draws the brazing material in the direction opposite to the direction of gravity, and thus gathers, to the gap, droplets of the brazing material residing in a large area around the gap between the first member and the second member.

In contrast, droplets of the molten brazing material in each of the gaps between the tab members 28 and the second member 22 located below in the first member 21 in FIG. 5 run downward due to gravity, to the site between the proximal portion of the tab member 28 and the second member 22, that is, the site represented by the reference symbol Q in FIG. 5. The droplets are then accumulated at this site. In general, the proximal portion of the tab member 28 defines a small gap against the second member 22 because the proximal portion of the tab member 28 is not readily affected by a deformation caused by a springback behavior. This small gap is filled with the run-off droplets of the brazing material. The capillary action causes the brazing material cladded on both surfaces of the lateral plate 24 to infiltrate into the gap between the first member 21 and the second member 22. The brazing material is thus also sufficiently distributed across the joint between the first member 21 and the second member 22 located below in the first member 21, as in the brazing material located above in the first member 21.

In order to obtain the above-described effects, that is, in order to distribute the brazing material across the gaps between the tab members 28 and the second member 22, performing bonding by brazing is required with the first member 21 and the second member 22 placed in a furnace such that the lengthwise direction of the tab member 28, that is, the direction from the proximal portion toward the tip of the tab member 28 is oriented vertically upward or vertically downward, as illustrated in FIG. 5. This orientation causes the gravity to act in the lengthwise direction of the tab member 28, and thus allows the brazing material to be sufficiently distributed across the gaps between the tab members 28 and the second member 22.

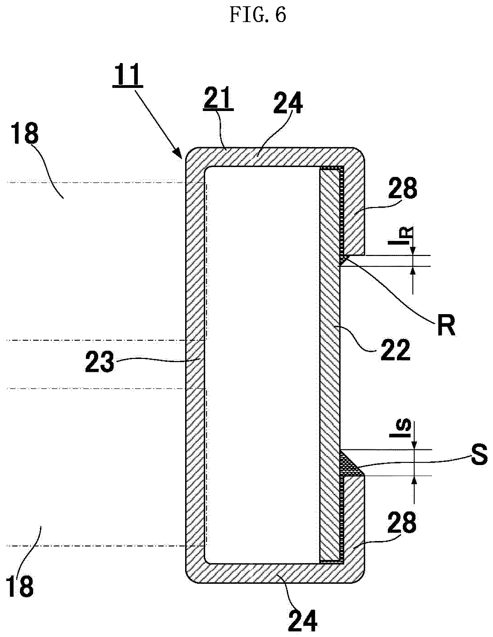

After completion of the brazing process involving the above-described steps, the gaps between the tab members 28 and the second member 22 are filled with the brazing material. As illustrated in FIG. 6, droplets of the brazing material are accumulated and then form fillets at the tips of the tab members 28, that is, the sites represented by the reference symbols R and S in FIG. 6. As illustrated in FIG. 6, the fillet formed at the site represented by the reference symbol S, that is, the fillet formed at the tip of the tab member 28 located below in the FIG. 6 is larger than the fillet formed at the site represented by the reference symbol R, that is, the fillet formed at the tip of the tab member 28 located above in FIG. 6. Specifically, an inequality l_{R} < l_{S} is satisfied, where l_{R} indicates the length of the fillet formed at the site represented by the reference symbol R, and l_{S} indicates the length of the fillet formed at the site represented by the reference symbol S. Such a difference in length is generated because the brazing material cladded on the outer surface of the second member 22 is molten, runs downward, and is then accumulated at the site represented by the reference symbol S.

As described above, a brazing material fillet formed at the tip of one of the two tab members 28, which are opposed to each other in the transverse direction of the upper header tube 11, has a different size from a brazing material fillet formed at the tip of the other of the tab members 28, in this embodiment.

### Comparative examinations

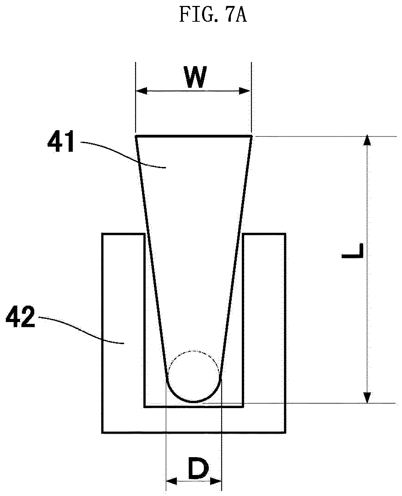

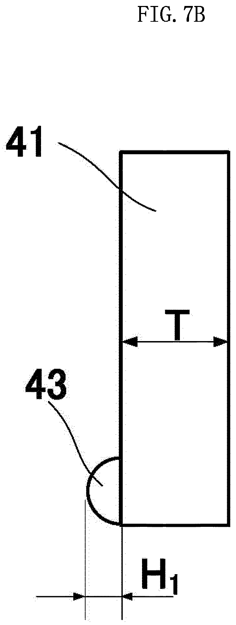

The functions and effects of the tab members 28 were verified through comparative examinations as described below. FIG. 7A is a front view illustrating the shapes of a test piece 41 that imitates the tab member 28 and a jig 42 that retains the test piece 41 before an examination. FIG. 7B is a side view illustrating the shape of the test piece 41 after the examination, that is, after a step of heating the test piece 41 in a furnace, which is not illustrated, and thus melting the brazing material.

The test piece 41 had a width W of 5 mm, a length L of 12 mm, and a thickness T of 3 mm, had smoothed surfaces, and was provided with a brazing material layer having a thickness of 0.15 mm. As illustrated in FIG. 7A, the test piece 41 had a semicircular tip. This examination involved comparison of the performances of test pieces 41 having different diameters D of the semicircular tips. Specifically, four types of test pieces 41 having diameters D of 1, 2, 3, and 4 mm were compared in terms of their performances. The jig 42 retained the test piece 41 in an upright orientation, while having no contact with the surfaces of the test piece 41. The jig 42 thus did not affect behaviors of the brazing material molten on the surfaces of the test piece 41.

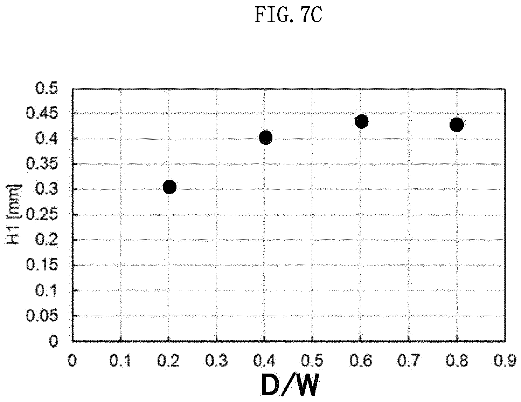

As illustrated in FIG. 7B, droplets of the brazing material molten on the surface of the test piece 41 were concentrated at the tip of the test piece 41 having a smaller width and formed a lump 43. FIG. 7C illustrates a relationship between the value calculated by dividing the diameter D of the semicircular tip of the test piece 41 by the width W of the proximal portion of the test piece 41, that is, the ratio D/W and the measured height H₁ of the lump 43 from the surface of the test piece 41, for each of the above-mentioned four types of test pieces 41. As illustrated in FIG. 7C, the height H₁ of the lump 43 rose with an increase in the ratio D/W and reached 0.44 mm at the ratio D/W of 0.6, but lowered after the ratio D/W exceeded 0.6. That is, the maximum height H₁ was achieved at the ratio D/W of 0.6. The lump 43 had a sufficient height when the ratio D/W was equal to or higher than 0.4, but suffered from an insufficient height when the ratio D/W was equal to or lower than 0.2. The diameters of 1, 2, 3, and 4 mm respectively provided the ratios D/W of 0.2, 0.4, 0.6, and 0.8, because the proximal portion of the test piece 41 used in this examination had a width W of 5 mm.

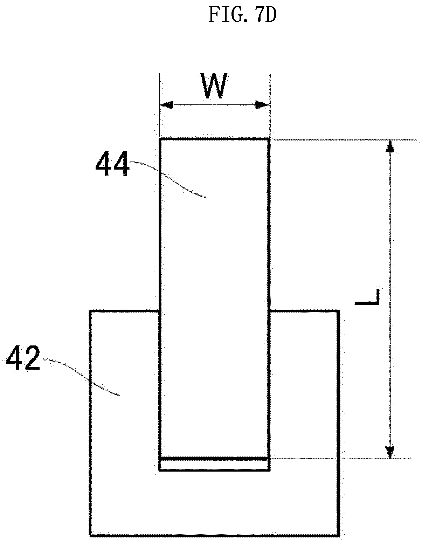

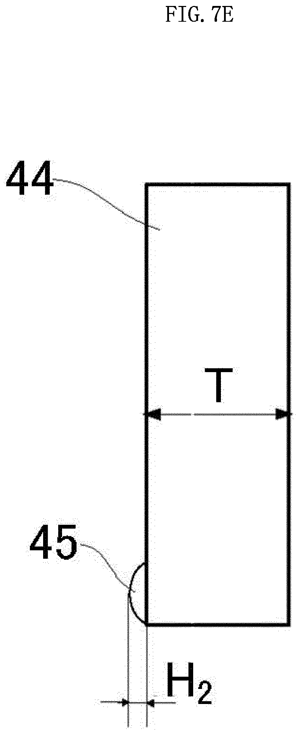

FIG. 7D is a front view illustrating the shapes of another test piece 44 according to a comparative example and the jig 42 before an examination. FIG. 7E is a side view illustrating the shape of the test piece 44 after the examination, that is, after a step of heating the test piece 44 in a furnace, which is not illustrated, and thus melting the brazing material. The test piece 44 had a width W of 5 mm, a length L of 12 mm, and a thickness T of 3 mm, had smoothed surfaces, and was provided with a brazing material layer having a thickness of 0.15 mm cladded on the surfaces. The test piece 44 was different from the test piece 41 in that the test piece 44 had a rectangular shape having a constant width W between the proximal portion and the tip. As illustrated in FIG. 7E, the brazing material molten on the surface of the test piece 44 ran downward to the tip of the test piece 44 and formed a lump 45. The formed lump 45, however, had a height H₂ of only 0.36 mm from the test piece 44. The accumulated brazing material can be thickened by the ratio D/W equal to or higher than 0.4. The lump of the brazing material having a larger height can thus improve the capacity of brazing.

As described above, the test piece 41 was able to concentrate the molten brazing material at the tip of the test piece 41 having a smaller width, and thus form a lump 43 of the brazing material at the tip of the test piece 41 having a larger height than that of the lump 45 of the brazing material formed at the tip of the test piece 44 under the same heating conditions for the test pieces 41 and 44. This result demonstrates that the molten brazing material can be concentrated at the tip of the tab member 28 and have a larger height, if the tab member 28 is designed to be tapered toward the tip in plan view. At the ratio D/W equal to or higher than 0.4, the brazing material is successfully concentrated at the tip of the tab member and accumulated into a large thickness. In contrast, at the ratio D/W equal to or lower than 0.2, droplets of the brazing material are accumulated also in an area closer to the proximal portion of the tab member and results in a relatively smaller thickness, because of an excessively small width of the tip of the tab member.

### Modifications 1 and 2

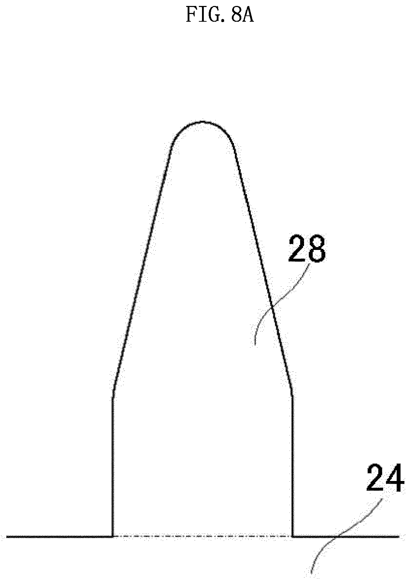

FIG. 8A is a plan view illustrating the shape of a tab member 28 according to Modification 1 of the present disclosure. As illustrated in FIG. 8A, the tab member 28 may have a constant width in a certain area from the proximal portion adjoining the lateral plate 24 to a middle portion, and may be gradually tapered from the middle portion toward the tip having the minimum width.

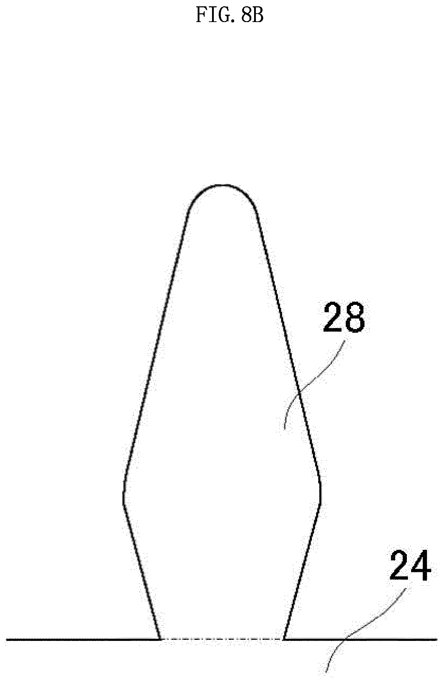

FIG. 8B is a plan view illustrating the shape of a tab member 28 according to Modification 2 of the present disclosure. As illustrated in FIG. 8B, the tab member 28 may have a smaller width at the proximal portion adjoining the lateral plate 24, be widen from the proximal portion to a middle portion, and then be gradually tapered toward the tip having the minimum width. That is, the tab member 28 may have a constricted proximal portion in plan view.

### Modification 3

FIG. 9 is a transverse sectional view illustrating the structure of an upper header tube 11 according to Modification 3 of the present disclosure in conformity with FIG. 5. As illustrated in FIG. 9, the upper header tube 11 has recesses 32 on the second member 22, and protrusions 33 at the tips of the tab members 28. The protrusions 33 are fitted in the respective recesses 32. This structure facilitates droplets of a molten brazing material to be accumulated in crank-shaped gaps R between the protrusions 33 and the recesses 32 in the brazing process. These droplets of the brazing material accumulated in the gaps R are distributed across the gaps between the first member 21 and the second member 22 due to a capillary action. The distributed brazing material can prevent a crack from being generated at the brazed joint between the first member 21 and the second member 22.

### Modification 4

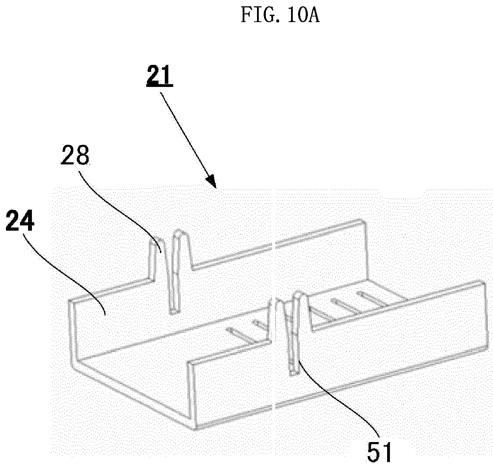

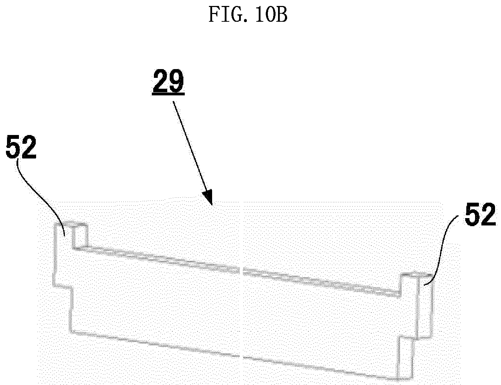

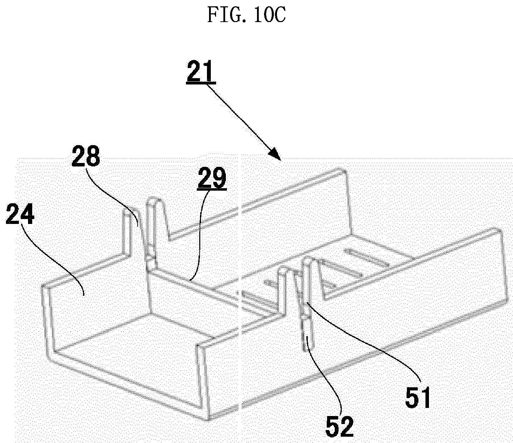

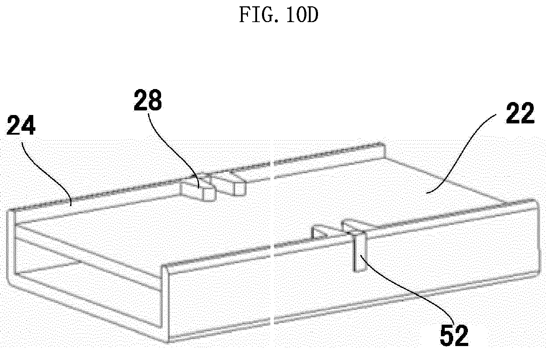

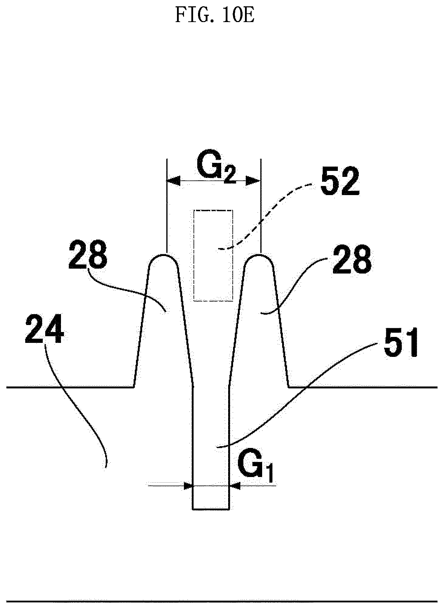

FIG. 10A is a perspective view illustrating the shape of a first member 21 according to Modification 4. FIG. 10B is a perspective view illustrating the shape of an end plate 29 according to Modification 4. FIG. 10C is a perspective view of the first member 21 after fitting of the end plate 29 to the first member 21. FIG. 10D is a perspective view of the first member 21 after fitting of the end plate 29 and a second member 22 to the first member 21 and bending of tab members 28. FIG. 10E is an explanatory diagram illustrating the shapes of the tab members 28 and an engaging notch 51 of the first member 21 according to Modification 4, in conformity with FIG. 4C.

Although the end plate 29 is fitted in the upper header tube 11 by engaging the edges of the end plate 29 with the engaging holes 30 and 31 of the bottom plate 23 and the second member 22 in the above-described example, the end plate 29 may also be fitted in the upper header tube 11 by a procedure other than the engaging holes 30 and 31. The engaging holes 30 and 31 may be replaced with engaging notches 51 provided to the edges of the two lateral plates 24 opposed to each other. As illustrated in FIG. 10A, the engaging notches 51 are each located between two tab members 28 adjacent to each other in the longitudinal direction of the first member 21 and extend from the edge of the lateral plate 24. As illustrated in FIG. 10B, the end plate 29 has ears 52 at the opposed edges. As illustrated in FIG. 10C, the ears 52 are inserted in the respective engaging notches 51 and engaged with the engaging notches 51, so that the end plate 29 is align to the proper position relative to the first member 21. As illustrated in FIG. 10D, the end plate 29 is covered with the second member 22, followed by a step of bending the tab members 28. These steps can fix the end plate 29 to the first member 21 and the second member 22.

As illustrated in FIG. 10E, the engaging notches 51 have a width G₁ equal to the distance between the two tab members 28 at the proximal portions. Since each of the tab members 28 is tapered toward the tip, as described above, the two tab members 28 at the tips have a distance G₂ therebetween larger than the distance between the two tab members 28 at the proximal portions. The distance G₂ is thus larger than the thickness of the end plate 29. The tab members 28 having this structure can guide the ears 52 of the end plate 29 to be inserted in the engaging notches 51. The ears 52 can therefore be readily inserted in the engaging notches 51.

### Modification 5

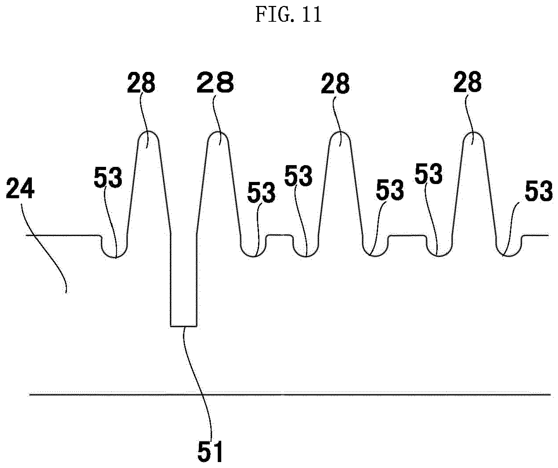

FIG. 11 is an explanatory diagram illustrating the shapes of tab members 28 and notches 53 of a first member 21 according to Modification 5, in conformity with FIG. 4C. The junction between the lateral plate 24 and each of the tab members 28 may have a shape other than that illustrated in FIG. 4C. As illustrated in FIG. 11, the proximal portion of the tab member 28 and the lateral plate 24 may be provided with the notches 53 therebetween to achieve structural "separation" of the tab member 28 from the lateral plate 24. Such structural "separation" of the tab member 28 from the lateral plate 24 can reduce a springback behavior occurring after bending of the tab member 28. That is, this structure can prevent the bent tab member 28 from deforming back to the original shape due to the resilience of the material of the tab member 28 and thus expanding the gap between the tab member 28 and the second member. The structure can therefore improve the structural stability of the upper header tube 11.

As described above, even in the case where relatively-small gaps are defined between the tab members 28 and the second member 22, these gaps retain droplets of a brazing material molten in the brazing process. The retained droplets of the brazing material are sequentially distributed across the joint between the first member 21 and the second member 22 due to a capillary action, and accumulated at the joint. The distributed brazing material can prevent a crack from being generated at the brazed joint between the first member 21 and the second member 22. This upper header tube 11 can readily achieve a sufficiently airtight structure in the manufacturing process.

The above-described embodiments are not to be construed as limiting the technical scope of the present disclosure. The present disclosure may be arbitrarily applied, modified, or revised without departing from the technical idea recited in the claims.

The header tube according to the present disclosure may have a specific mechanical structure other than the above-described specific structure of the upper header tube 11. Specifically, the header tube according to the present disclosure does not necessarily include the corrugated plate 25. The tab members included in the header tube according to the present disclosure may have a specific shape other than the above-described specific shapes of the tab members 28.

The heat exchanger according to the present disclosure may have a specific structure other than the above-described specific structure of the heat exchanger 5. Specifically, the heat exchanger according to the present disclosure does not necessarily include both of the first lower header tube 12 and the second lower header tube 13. The two header tubes in the heat exchanger according to the present disclosure are not necessarily disposed apart from each other in the vertical direction. The two header tubes in the heat exchanger according to the present disclosure may also be disposed apart from each other in the horizontal direction. In the heat exchanger according to the present disclosure, only at least one of multiple header tubes is required to be the header tube according to the present disclosure.

The air conditioner according to the present disclosure may have a specific structure other than the above-described specific structure of the air conditioner 1. In the air conditioner according to the present disclosure, only either one of the indoor unit and the outdoor unit is required to include the above-described heat exchanger according to the present disclosure. The other of the indoor unit and the outdoor unit may include another type of heat exchanger. Alternatively, the air conditioner according to the present disclosure may include components not demonstrated in the above description.

### Reference Signs List

- 1: Air conditioner
- 2: Outdoor unit
- 3: Indoor unit
- 4: Pipe
- 5: Heat exchanger
- 6: Fan
- 7: Compressor
- 8: Four-way valve
- 9: Expansion valve
- 11: Upper header tube
- 12: First lower header tube
- 13: Second lower header tube
- 14: First inlet/outlet port
- 15: Second inlet/outlet port
- 16: First heat transfer tube array
- 17: Second heat transfer tube array
- 18: Heat transfer tube
- 19: Heat transfer fin
- 21: First member
- 22: Second member
- 23: Bottom plate
- 24: Lateral plate
- 25: Corrugated plate
- 26: Protruding column
- 27a, 27b: Insertion hole
- 28: tab member
- 29: End plate
- 30, 31: Engaging hole
- 32: Recess
- 33: Protrusion
- 41, 44: Test piece
- 42: Jig
- 43, 45: Lump
- 51: Engaging notch
- 52: Ear
- 53: Notch

## Claims

1. A header tube (11) connectable to heat transfer tubes (18) arranged in parallel to each other, the header tube (11) being capable of constituting a heat exchanger (5) together with the heat transfer tubes (18), the header tube (11) comprising:
a first member (21) that
includes
a bottom plate (23), and
a pair of lateral plates (24) standing at opposed edges of the bottom plate (23), and
has a channel section defining a groove;
a second member (22) that has a tabular shape, the second member (22) being disposed apart from the bottom plate (23), held between the pair of lateral plates (24), and bonded to the first member (21) by brazing, so as to be a lid of the groove defined by the channel section; and
tab members (28) disposed at edges of the pair of lateral plates (24) of the first member (21), the tab members (28) being bent relative to the lateral plate (24) so as to face the second member (22),
wherein a gap between the second member (22) and the tab members (28) and a gap between the second member (22) and the lateral plates (24) of the first member (21) are filled with a brazing material,
**characterized in that**
each of the tab members (28) is tapered toward a tip in plan view,
the tab members (28) have, at the tips, protrusions (33) protruding toward the second member (22),
the second member (22) has recesses (32), and
the protrusions (33) are fitted in the respective recesses (32).

2. The header tube (11) according to claim 1, wherein each of the tab members (28) is tapered from a middle portion in a lengthwise direction of the tab member (28) toward the tip.

3. The header tube (11) according to claim 1, wherein each of the tab members (28) is widen from a proximal portion to a middle portion in a lengthwise direction of the tab member (28), and tapered from the middle portion toward the tip, the proximal portion of the tab member (28) adjoining the lateral plate (24).

4. The header tube (11) according to claim 1, wherein a brazing material fillet (R) formed at a tip of one of two tab members (28) has a different size from a brazing material fillet (S) formed at a tip of the other of the two tab members (28), the two tab members (28) being opposed to each other in a transverse direction of the header tube (11).

5. The header tube (11) according to claim 1, further comprising:
an end plate (29) for closing an end of the header tube (11), the end plate (29) being fixed to the first member (21) and the second member (22).

6. The header tube (11) according to claim 1, further comprising:
a partition plate (29) for dividing an internal space of the header tube (11), the partition plate (29) being fixed to the first member (21) and the second member (22).

7. The header tube (11) according to claim 6, wherein
the lateral plates (24) have engaging notches (51), each of the engaging notches (51) being disposed between mutually adjacent two of the tab members (28), and
the partition plate (29) engages with the engaging notches (51).

8. The header tube (11) according to claim 1, wherein the edges of the lateral plates (24) are notched at portions adjacent to proximal portions of the tab members (28) so as to form notches (53).

9. The header tube (11) according to claim 1, wherein the tip of each of the tab members (28) has an arc contour in plan view.

10. The header tube (11) according to claim 9, wherein D/W is equal to or higher than 0.4 and is lower than or equal to 0.8, where D represents a diameter of the arc contour that the tip of each of the tab members (28) has in plan view and W represents a width of a proximal portion of each of the tab members (28).

11. The header tube (11) according to claim 1, wherein the tab members (28) are bent so as to be perpendicular to the lateral plates (24).

12. A heat exchanger (5), comprising:
the header tube (11) according to claim 1; and
heat transfer tubes (18) connected to the header tube (11).

13. An air conditioner (1) comprising an indoor unit (3) and an outdoor unit (2), the air conditioner (1) being configured to cause refrigerant to circulate between the indoor unit (3) and the outdoor unit (2),
wherein at least either of the indoor unit (3) and the outdoor unit (2) includes the heat exchanger (5) according to claim 12.

## Patentansprüche

1. Sammelleitung (11), die mit Wärmeübertragungsleitungen (18) verbindbar ist, die parallel zueinander angeordnet sind, wobei die Sammelleitung (11) ausgebildet ist, zusammen mit den Wärmeübertragungsleitungen (18) einen Wärmetauscher (5) zu bilden, wobei die Sammelleitung (11) umfasst:
ein erstes Teil (21), das
aufweist
eine Bodenplatte (23), und
ein Paar Seitenplatten (24), die an gegenüberliegenden Kanten der Bodenplatte (23) aufragen, und
einen Kanalabschnitt aufweist, der eine Rinne festlegt;
ein zweites Teil (22), das eine Tafelform aufweist, wobei das zweite Teil (22) von der Bodenplatte (23) beabstandet angeordnet ist, zwischen dem Paar Seitenplatten (24) gehalten wird und durch Löten mit dem ersten Teil (21) verbunden ist, so dass es ein Deckel der durch den Kanalabschnitt festgelegten Rinne ist; und
Laschenteile (28), die an Kanten des Paars Seitenplatten (24) des ersten Teils (21) angeordnet sind, wobei die Laschenteile (28) relativ zu der Seitenplatte (24) so gebogen sind, dass sie dem zweiten Teil (22) zugewandt sind,
wobei ein Spalt zwischen dem zweiten Teil (22) und den Laschenteilen (28) und
ein Spalt zwischen dem zweiten Teil (22) und den Seitenplatten (24) des ersten Teils (21) mit einem Lötmaterial gefüllt sind,
**dadurch gekennzeichnet, dass**
jedes der Laschenteile (28) in Draufsicht zu einer Spitze hin verjüngt ist,
die Laschenteile (28) an den Spitzen Vorsprünge (33) aufweisen, die zu dem zweiten Teil (22) hin vorstehen,
das zweite Teil (22) Vertiefungen (32) aufweist, und
die Vorsprünge (33) in die jeweiligen Vertiefungen (32) eingepasst sind.

2. Sammelleitung (11) nach Anspruch 1, wobei jedes der Laschenteile (28) von einem Mittelabschnitt in einer Längsrichtung des Laschenteils (28) zu der Spitze hin verjüngt ist.

3. Sammelleitung (11) nach Anspruch 1, wobei jedes der Laschenteile (28) von einem proximalen Abschnitt zu einem Mittelabschnitt in einer Längsrichtung des Laschenteils (28) hin verbreitert ist, und von dem Mittelabschnitt zu der Spitze hin verjüngt ist, wobei der proximale Abschnitt des Laschenteils (28) an die Seitenplatte (24) angrenzt.

4. Sammelleitung (11) nach Anspruch 1, wobei eine Lötmaterialkehle (R), die an einer Spitze eines von zwei Laschenteile (28) ausgebildet ist, eine andere Größe als eine Lötmaterialkehle (S) aufweist, die an einer Spitze des anderen der zwei Laschenteile (28) ausgebildet ist, wobei die zwei Laschenteile (28) einander in einer Querrichtung der Sammelleitung (11) gegenüberliegen.

5. Sammelleitung (11) nach Anspruch 1, ferner umfassend:
eine Endplatte (29) zum Schließen eines Endes der Sammelleitung (11), wobei die Endplatte (29) an dem ersten Teil (21) und dem zweiten Teil (22) befestigt ist.

6. Sammelleitung (11) nach Anspruch 1, ferner umfassend:
eine Unterteilungsplatte (29) zum Unterteilen eines Innenraums der Sammelleitung (11), wobei die Unterteilungsplatte (29) an dem ersten Teil (21) und dem zweiten Teil (22) befestigt ist.

7. Sammelleitung (11) nach Anspruch 6, wobei
die Seitenplatten (24) Eingriffskerben (51) aufweisen, wobei jede der Eingriffskerben (51) zwischen zueinander benachbarten zwei der Laschenteile (28) angeordnet ist, und
die Unterteilungsplatte (29) mit den Eingriffskerben (51) in Eingriff steht.

8. Sammelleitung (11) nach Anspruch 1, wobei die Kanten der Seitenplatten (24) an zu proximalen Abschnitten der Laschenteile (28) benachbarten Abschnitten eingekerbt sind, um Kerben (53) zu bilden.

9. Sammelleitung (11) nach Anspruch 1, wobei die Spitze jedes der Laschenteile (28) in Draufsicht eine Bogenkontur aufweist.

10. Sammelleitung (11) nach Anspruch 9, wobei D/W gleich oder größer als 0,4 und kleiner oder gleich 0,8 ist, wobei D einen Durchmesser der Bogenkontur repräsentiert, welche die Spitze jedes der Laschenteile (28) in Draufsicht aufweist, und W eine Breite eines proximalen Abschnitts jedes der Laschenteile (28) repräsentiert.

11. Sammelleitung (11) nach Anspruch 1, wobei die Laschenteile (28) so gebogen sind, dass sie senkrecht zu den Seitenplatten (24) sind.

12. Wärmetauscher (5), umfassend:
die Sammelleitung (11) nach Anspruch 1; und
Wärmeübertragungsleitungen (18), die mit der Sammelleitung (11) verbunden sind.

13. Klimaanlage (1), umfassend eine Inneneinheit (3) und eine Außeneinheit (2), wobei die Klimaanlage (1) konfiguriert ist, um zu bewirken, dass Kältemittel zwischen der Inneneinheit (3) und der Außeneinheit (2) zirkuliert,
wobei die Inneneinheit (3) und/oder die Außeneinheit (2) den Wärmetauscher (5) nach Anspruch 12 aufweist.

## Revendications

1. Tube collecteur (11) pouvant être relié à des tubes de transfert de chaleur (18) agencés parallèlement les uns aux autres, le tube collecteur (11) étant capable de constituer un échangeur de chaleur (5) conjointement avec les tubes de transfert de chaleur (18), le tube collecteur (11) comprenant :
un premier élément (21) qui
comprend
une plaque inférieure (23), et
une paire de plaques latérales (24) se dressant au niveau de bords opposés de la plaque inférieure (23), et
a une section de canal définissant une rainure ;
un second élément (22) qui a une forme tabulaire, le second élément (22) étant disposé à l'écart de la plaque inférieure (23), maintenu entre la paire de plaques latérales (24), et lié au premier élément (21) par brasage, de manière à être un couvercle de la rainure définie par la section de canal ; et
des éléments languette (28) disposés au niveau de bords de la paire de plaques latérales (24) du premier élément (21), les éléments languette (28) étant pliés par rapport à la plaque latérale (24) de manière à faire face au second élément (22),
dans lequel un espace entre le second élément (22) et les éléments languette (28) et un espace entre le second élément (22) et les plaques latérales (24) du premier élément (21) sont remplis d'un matériau de brasage,
**caractérisé en ce que**
chacun des éléments languette (28) est effilé vers une pointe en vue en plan,
les éléments languette (28) ont, au niveau des pointes, des saillies (33) faisant saillie vers le second élément (22),
le second élément (22) a des évidements (32), et
les saillies (33) sont ajustées dans les évidements (32) respectifs.

2. Tube collecteur (11) selon la revendication 1, dans lequel chacun des éléments languette (28) est effilé à partir d'une partie centrale dans une direction longitudinale de l'élément languette (28) vers la pointe.

3. Tube collecteur (11) selon la revendication 1, dans lequel chacun des éléments languette (28) est élargi depuis une partie proximale jusqu'à une partie centrale dans une direction longitudinale de l'élément languette (28), et effilé depuis la partie centrale vers la pointe, la partie proximale de l'élément languette (28) étant adjacente à la plaque latérale (24).

4. Tube collecteur (11) selon la revendication 1, dans lequel un congé de matériau de brasage (R) formé au niveau d'une pointe de l'un des deux éléments languette (28) a une taille différente d'un congé de matériau de brasage (S) formé au niveau d'une pointe de l'autre des deux éléments languette (28), les deux éléments languette (28) étant opposés l'un à l'autre dans une direction transversale du tube collecteur (11).

5. Tube collecteur (11) selon la revendication 1, comprenant en outre :
une plaque d'extrémité (29) pour fermer une extrémité du tube collecteur (11), la plaque d'extrémité (29) étant fixée au premier élément (21) et au second élément (22).

6. Tube collecteur (11) selon la revendication 1, comprenant en outre :
une plaque de séparation (29) pour diviser un espace interne du tube collecteur (11), la plaque de séparation (29) étant fixée au premier élément (21) et au second élément (22).

7. Tube collecteur (11) selon la revendication 6, dans lequel
les plaques latérales (24) ont des encoches de mise en prise (51), chacune des encoches de mise en prise (51) étant disposée entre deux des éléments languette (28) mutuellement adjacents, et
la plaque de séparation (29) vient en prise avec les encoches de mise en prise (51).

8. Tube collecteur (11) selon la revendication 1, dans lequel les bords des plaques latérales (24) sont entaillés au niveau de parties à proximité de parties proximales des éléments languette (28) de façon à former des encoches (53).

9. Tube collecteur (11) selon la revendication 1, dans lequel la pointe de chacun des éléments languette (28) a un contour d'arc en vue en plan.

10. Tube collecteur (11) selon la revendication 9, dans lequel D/W est supérieur ou égal à 0,4 et est inférieur ou égal à 0,8, où D représente un diamètre du contour d'arc que la pointe de chacun des éléments languette (28) a en vue en plan et W représente une largeur d'une partie proximale de chacun des éléments languette (28).

11. Tube collecteur (11) selon la revendication 1, dans lequel les éléments languette (28) sont pliés de façon à être perpendiculaires aux plaques latérales (24).

12. Échangeur de chaleur (5) comprenant :
le tube collecteur (11) selon la revendication 1 ; et
des tubes de transfert de chaleur (18) reliés au tube collecteur (11).

13. Climatiseur (1) comprenant une unité intérieure (3) et une unité extérieure (2), le climatiseur (1) étant configuré pour faire circuler un réfrigérant entre l'unité intérieure (3) et l'unité extérieure (2),
dans lequel au moins l'une ou l'autre de l'unité intérieure (3) et de l'unité extérieure (2) comporte l'échangeur de chaleur (5) selon la revendication 12.
